(19) Europäisches Patentamt
European Patent Office
Office européen des brevets

(11) **EP 1 039 370 B1**

(12) **EUROPEAN PATENT SPECIFICATION**

(45) Date of publication and mention
of the grant of the patent:
**26.10.2005 Bulletin 2005/43**

(51) Int Cl.$^7$: **G06F 5/06**

(21) Application number: **99105629.2**

(22) Date of filing: **19.03.1999**

(54) **Modulo address generator and a method for implementing modulo addressing**

Moduloadressgenerator und eine Methode für das Einführen des Moduloaddressieren

Générateur d'adresse de modulo et une méthode pour mettre en application l'adressage de modulo

(84) Designated Contracting States:
**DE FR GB**

(43) Date of publication of application:
**27.09.2000 Bulletin 2000/39**

(73) Proprietor: **Freescale Semiconductor, Inc.**
**Austin, Texas 78735 (US)**

(72) Inventors:
- **Tokar, Yakov**
  **Ashdod (IL)**
- **Salant, Yoram**
  **40800 Rosh-Haain (IL)**
- **Tsukerman, Leonid**
  **32584 Haifa (IL)**

- **Fabrice, Aidan**
  **Ranaana 43557 (IL)**
- **Elnekave, Mark**
  **Ramat Gan (IL)**

(74) Representative: **Wray, Antony John**
**Optimus,**
**Grove House,**
**Lutyens Close,**
**Chineham Court**
**Basingstoke, Hants RG24 8AG (GB)**

(56) References cited:
**DE-A- 19 748 547**          **US-A- 5 659 700**

EP 1 039 370 B1

## Description

### Field of the Invention

The present invention relates generally to an modulo address generator for allowing contiguous set of memory locations to be accessed as a circular buffer, and for a method for implementing modulo addressing, especially within a processor.

### Background of the Invention

Modulo addressing allows a contiguous set of memory locations within a memory bank to be accessed as a circular buffer. The circular buffer is bounded by a starting address, and an end address within the memory bank. A modulo address generator provides target addresses within the circular buffer. The modulo address generator usually stores data regarding the location and the length of circular buffer, and usually produces a target instruction when given a displacement between the current target address to the next target address.

Modulo address generators are a part of the critical path of addressing units within data processing units and Digital Signal Processors (i.e.- processors). Digital signal processing and data processing require extensive use of modulo addressing. In order to decrease the power consumption of processors, and in order to increase their speed of operation, many implementations of modulo addressing restrict either the starting address of the circular buffer, the size of the circular buffer, or the displacement value.

Prior art modulo address generators implement the following equations :

$$PTR(n) = (PTR(n-1) + DISP), \text{ if } DISP>0, \text{ and } (PTR(n-1)+DISP)\leq END.$$

$$PTR(n) = (PTR(n-1) + DISP - END - 1+BEGIN), \text{ if } DISP>0, \text{ and }$$

$$(PTR(n-1)+DISP)> END.$$

$$PTR(n) = (PTR(n-1) + DISP), \text{ if } DISP<0, \text{ and } (PTR(n-1)+DISP)\geq BEGIN.$$

$$PTR(n) = (PTR(n-1) + DISP + END + 1 - BEGIN), \text{ if } DISP<0, \text{ and }$$

$$(PTR(n-1)+DISP)< BEGIN.$$

Wherein PTR(n-1) is the current target address, PTR(n) is the next target address, DISP is the displacement between the current target address to the next target address, BEGIN is the starting address of the circular buffer, END is the end address of the circular buffer.

This equations and other derivative equations used to implement modulo addressing are disclosed in "True Modulo Address Generators for Digital Signal Processors", **The Proceedings of the 8th International Conference on Signal Processing Applications & Technology,** 1997, pg. 843 by Mohit K. Prasad and Ravi K. Kolagotla. The implementation of these equations required to store both END and BEGIN, wherein the selection of the next target address required comparisons to both END (when the displacement is positive) and to BEGIN (when the displcaement is negative).

Two types of modulo address generators implementing these equations are disclosed in U.S. Pat. No. 5,623,621 of Garde. The first type of modulo address generator disclosed in U.S. Pat. 5,623,621 is tailored to either positive displacements or to negative displacements, thus it restricts the displacement value. A first modulo address generator handles positive displacement, the first modulo address generator determines the next target address by comparing a wrapped address to BEGIN. A second modulo address generator handles negative displacement, the second modulo address generator determines the next target address by comparing a wrapped address to END. A second type of modulo address generators, for example as disclosed in US 5,659,700, can handle both positive and negative displacements, but requires additional hardware, such as an additional adder and multiplexer, thus increasing the power consumption of modulo address generator and limiting the speed of operation of the modulo address generator and of the processor in which the modulo address is included. This addition of hardware is more acute in processors having a plurality of modulo address generators.

Accordingly, there is a need for improved and compact modulo address generator, which can handle arbitrary displacements, starting address and end addresses, as in claims 1 and 7.

## Brief Description of the Drawings

While the invention is pointed out with particularity in the appended claims, other features of the invention are disclosed by the following detailed description taken in conjunction with the accompanying drawings, in which:

FIG. 1 is a schematic diagram of a portion of a memory bank and an modulo address generator according to an embodiment of the invention;
FIG. 2 is a schematic description of a modulo address generator, according to a preferred embodiment of the invention;
FIG. 3 is a schematic description of a modulo address generator, according to a further embodiment of the invention.

## Detailed Description of the Drawings

It should be noted that the particular terms and expressions employed and the particular structural and operational details disclosed in the detailed description and accompanying drawings are for illustrative purposes only and are not intended to in any way limit the scope of the invention as described in the appended claims.

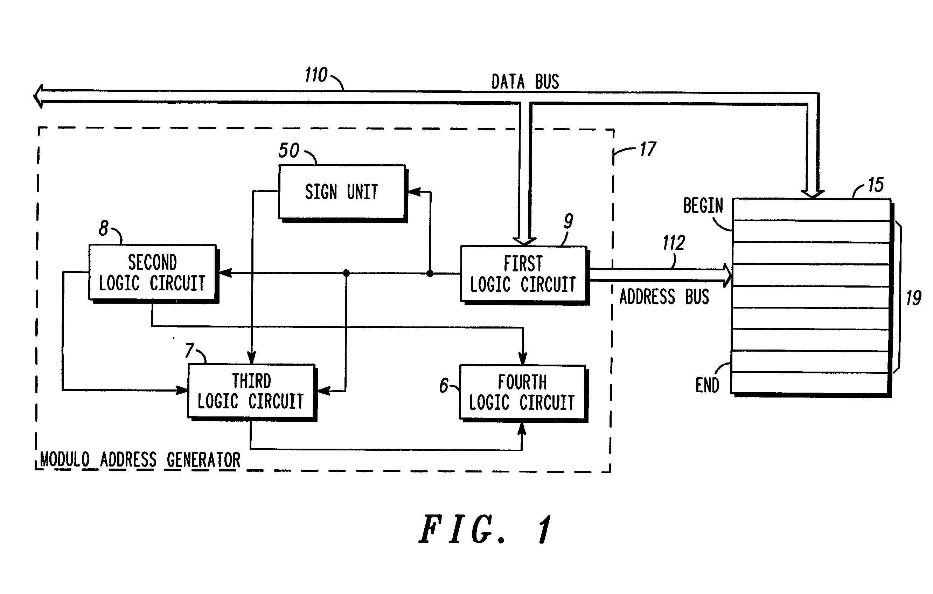

FIG. 1 a schematic diagram of a portion of memory bank 15 and an modulo address generator 17 according to an embodiment of the invention. Circular buffer 19 is located within the portion of memory bank 15, and is bounded by a starting address BEGIN, and an end address END. Circular buffer 19 can be located in any predetermined location within memory bank 15. Modulo address generator 17 and memory bank 15 are coupled via address bus 112, and can also be coupled via data bus 110. When there is a need to access one of the memory words within circular buffer 19, modulo address generator generates a target address within circular buffer 19, the address is sent, via address bus 112 to memory bank 15, and allows to access the said memory word, preferably via data bus 110.

Modulo address generator 17 is coupled to data bus 110, for receiving BEGIN, END, DISP. Modulo address generator 17 can also receive via data bus 110 a target address, usually during the initialization of modulo address generator 17.

Modulo address generator 17 is compact and can handle arbitrary DISP (both positive and negative), END and BEGIN. Modulo address generator 17 produces a absolute address and a wrapped address and compares one of these address to BEGIN, in order to determine which of these addresses is within circular buffer 19.

Modulo address generator 17 comprising :

First logic circuit 9, coupled to data bus 110, for storing PTR(n-1), wherein it can also store a target address send to modulo address generator 17 via data bus 110. First logic circuit 9 is also for storing DISP and PTR(n), and for storing information which defines the boundaries of the circular buffer. The information can define two out of BEGIN, END, LENGTH. Preferably, first logic circuit stores BEGIN and LENGTH. First circuit logic 9 has a first register (not shown in FIG. 1) for storing PTR(n).
Sign unit 50, coupled to first logic circuit 9, for determining the sign of DISP;
Second logic circuit 8, coupled to first logic circuit 9, for generating an absolute address DISP+PTR(n-1).

Third logic circuit 7, coupled to the first and second logic circuits 9 and 8, and to sign unit 50, for generating a wrapped address, wherein the generation of the wrapped address involves adding the length of the circular buffer LENGTH to the absolute address when DISP is negative and involves subtracting LENGTH from the absolute address when DISP is positive.

Fourth logic circuit 6, coupled to third logic circuit 7 and to second logic circuit 8, for determining which of the wrapped address and the absolute address is within the circular buffer 19 and for loading the first register with the address which is within circular buffer 19. Fourth logic determines which of these two addresses is within circular buffer by comparing the wrapped address to BEGIN if DISP is positive, and by comparing the absolute address to BEGIN, if DISP is negative.

Modulo address generator 17 implements the following equations :

$$PTR(n) = (PTR(n-1) + DISP), \text{ if } DISP>0, \text{ and } (PTR(n-1)+DISP-LENGTH)< BEGIN.$$

$$PTR(n) = (PTR(n-1) + DISP - LENGTH), \text{ if } DISP>0, \text{ and }$$

$$(PTR(n-1)+DISP-LENGTH)\geq BEGIN.$$

$$PTR(n) = (PTR(n-1) + DISP), \text{ if } DISP<0, \text{ and } (PTR(n-1)+DISP)\geq BEGIN.$$

$$PTR(n) = (PTR(n-1) + DISP +LENGTH), \text{ if } DISP<0, \text{ and}$$

$$(PTR(n-1)+DISP)< BEGIN.$$

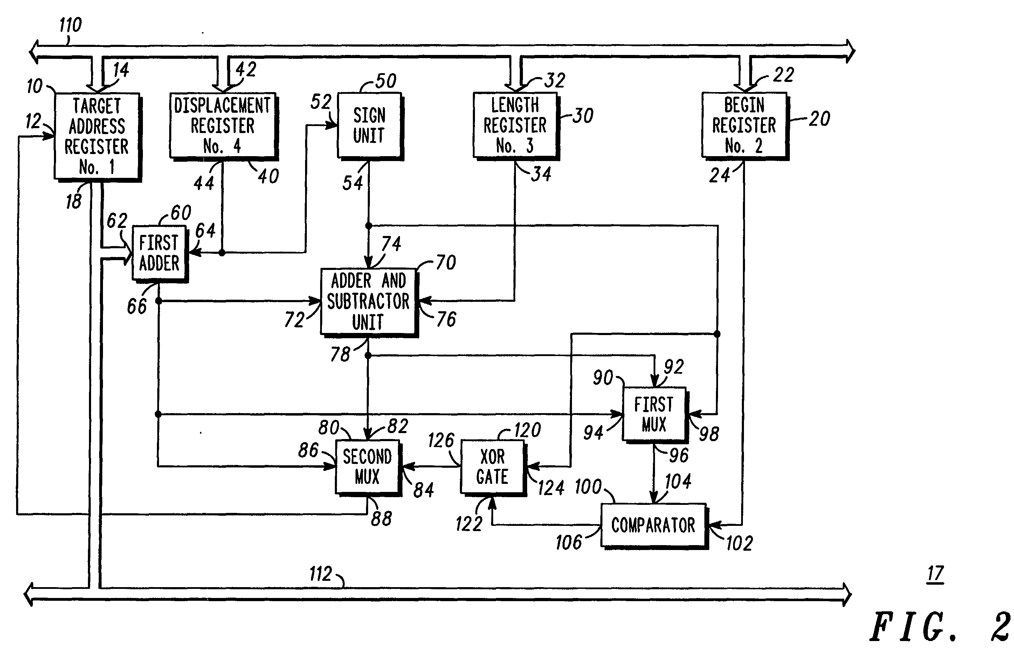

FIG. 2 is a more detailed schematic description of modulo address generator 17 , according to a preferred embodiment of the invention. First logic circuit 8 further comprising : second register 20 for storing BEGIN, third register 30 for storing LENGTH, and fourth register 40 for storing DISP. First register 10 has inputs 12 and 14 and output 18. Second register 20 has input 22 and output 24. Third register 30 has input 32 and output 34. Fourth register 40 has input 42 and output 44. Second logic circuit 8 has adder 60, adder 60 has two inputs 62, 64 and output 66. Inputs 14, 22, 32 and 42 of first to fourth registers 10, 20 30 and 40 are coupled to data bus 110. Output 18 of first register 10 is coupled to address bus 112 and to input 62 of adder 60. Input 64 of adder 60 is coupled to output 44 of fourth register 40.

Third logic circuit 7 has adder and subtractor unit 70, for providing a wrapped address. Adder and subtractor unit 70 has inputs 72 and 76, a control input 74 and output 78. Input 76 of adder and subtractor unit 70 is coupled to output 34 of third register 30, for receiving LENGTH. Input 72 of adder and subtractor unit 70 is coupled to output 66 of adder 60, for receiving absolute address PTR(n-1)+DISP. Sign unit 50 has input 52 and output 54. Input 52 of sign unit 50 is coupled to output 44 of fourth register 40, for receiving DISP. Output 54 of sign unit 50 is coupled to control input 74 of adder and subtractor unit 70, for indicating whether DISP is positive or negative. If DISP is negative, adder and subtractor unit 70 produces a wrapped address by adding LENGTH to PTR(n-1)+DISP, if DISP is positive, adder and subtractor unit produces a wrapped address by subtracting LENGTH from PTR(n-1)+DISP.

Fourth logic circuit 6 comprising : first multiplexer 90, second multiplexer 80, comparator 100 and XOR logic gate 120 (i.e.- XOR). First multiplexer 90, for selecting whether to send comparator 90 a wrapped address, provided by adder and subtractor unit 70 or send an absolute address, provided by adder 60. First multiplexer has inputs 94 and 92, a control input 98 and output 96. Input 92 is coupled to output 78 of adder and subtractor unit 70, for receiving the wrapped address. Input 94 is coupled to output 66 of adder 60 for receiving the absolute address. Control input 98 is coupled to output 54 of sign unit, for having two inputs, a control input and an output, for selecting one of the absolute address and the wrapped address. Comparator 100 to compare the address sent to it by adder and subtractor unit 70 to BEGIN, provided by second register 20. Comparator 100 has inputs 102 and 104 and output 106. Input 102 coupled to output 24 of second register 20, input 104 coupled to output 96 of first multiplexer 90. Second multiplexer 80, having inputs 82 and 86, a control input 84 and output 88, for receiving a wrapped address from adder and subtractor unit 70 and for receiving an absolute address from adder 60 and for selecting either one of these two addresses according to control signals received in input 84, the selected address is sent to first register 10. Input 82 is coupled to output 78 of adder and subtractor unit 70, input 86 is coupled to output 66 of adder 60 and output 88 is coupled to input 12 of first register 10. XOR 120, having inputs 124 and 122 and output 126, input 124 is coupled to output 54 of sign unit 50, input 122 is coupled to output 106 of comparator 100 and output 126 is coupled to input 84 of second multiplexer. XOR 120 sends control signals, for selecting which of the wrapped address and absolute address is selected by second multiplexer 80, the control signals are the result of a XOR operation between the output of sign unit 50 and the output of comparator 100.

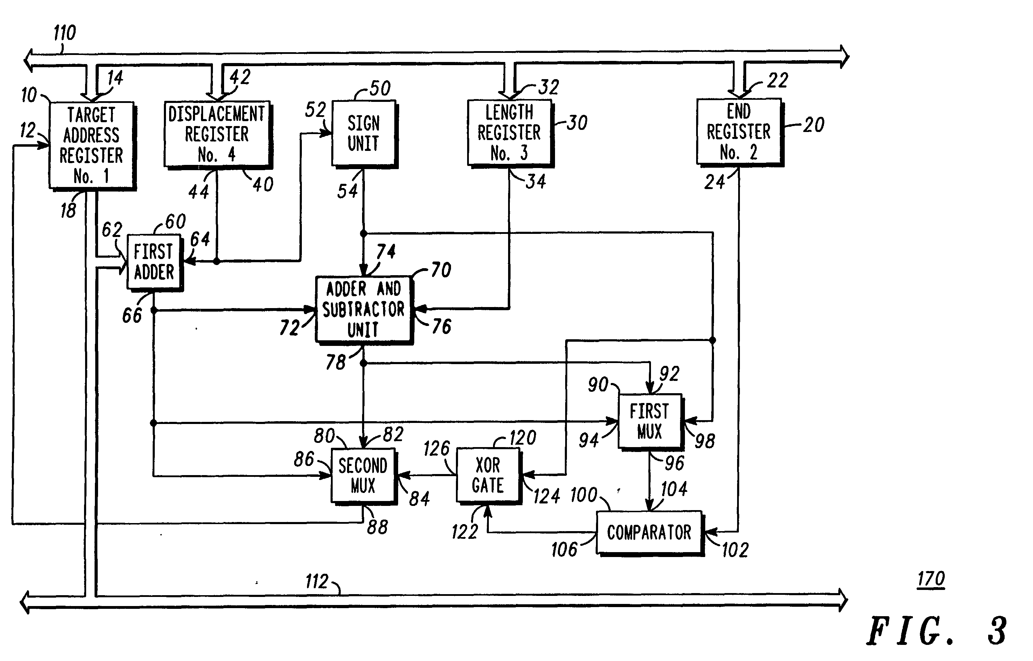

FIG. 3 is a detailed schematic description of modulo address generator 170, according to another preferred embodiment of the invention. Modulo address generator 170 of FIG. 2 is analogues to modulo address generator 17, but second register 20 stores END, inputs 94 and 92 of first multiplexer 70 are coupled to output 78 of adder and subtractor unit and output 66 of adder 60, accordingly.

Modulo address generator 17 implements the following equations :

$$PTR(n) = (PTR(n-1) + DISP), \text{ if } DISP>0, \text{ and } (PTR(n-1)+DISP)< END.$$

$$PTR(n) = (PTR(n-1) + DISP - LENGTH), \text{ if } DISP>0, \text{ and}$$

$$(PTR(n-1)+DISP)\geq END.$$

$$PTR(n) = (PTR(n-1) + DISP), \text{ if } DISP<0, \text{ and } (PTR(n-1)+DISP+LENGTH)\geq END.$$

$$PTR(n) = (PTR(n-1) + DISP + LENGTH), \text{ if } DISP<0, \text{ and}$$

$$(PTR(n-1)+DISP+LENGTH)< END.$$

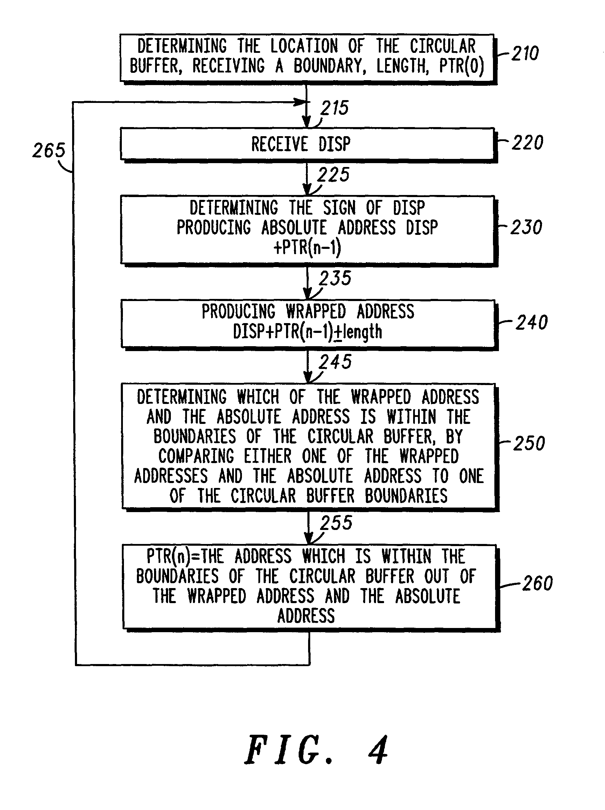

FIG. 4 is a flow chart of a method 200 for implementing modulo addressing. Method 200 comprising the following steps :

Determining 210 the location of a circular buffer, and receiving the one of the boundaries (either the starting address BEGIN or the end address END) of the circular buffer, the length LENGTH of the circular buffer, and an initial target address PTR(0) within the circular buffer. As indicated by path 215, step 210 is followed by step 220.

Receiving 220 a displacement DISP, between the previous target address PTR(n-1) within a circular buffer and the current target address PTR(n) within the circular buffer. As indicated by path 225, step 220 is followed by step 230.

Determining 230 whether DISP is positive or negative and producing accordingly sign signal, and producing an absolute address by adding DISP to PTR(n-1). As indicated by path 235, step 230 is followed by step 240.

Producing 240 a wrapped address, according to the sign signal, whereas the wrapped address equals DISP+PTR(n-1)-LENGTH if the sign signal indicates that DISP is positive, else, the wrapped address equals DISP+PTR(n-1)+LENGTH. As indicated by path 245, step 240 is followed by step 250.

Determining 250 which of the addresses (the wrapped address and the absolute address) is within the circular buffer, by comparing either one of the wrapped address and the absolute address to one of the circular buffer boundaries. Wherein if the determination involves the comparison of BEGIN to either one of the wrapped address and the absolute address then if DISP is positive, the wrapped address is compared to BEGIN, and if DISP is negative, the absolute address is compared to BEGIN. Wherein if the determination involves the comparison of END to either one of the wrapped address and the absolute address then if DISP is negative, the wrapped address is compared to END, and if DISP is positive, the absolute address is compared to END. As indicated by path 255, step 250 is followed by step 260.

Giving 260 the current target address the value of the address which is within the boundaries of the circular buffer. As indicated by path 265, step 260 is followed by step 220.

Thus, there has been described herein an embodiment including at least one preferred embodiment of an improved method and apparatus for a modulo address generator and a method for implementing modulo addressing. It will be apparent to those skilled in the art that the disclosed subject matter may be modified in numerous ways and may assume many embodiments other than the preferred form specifically set out and described above. Accordingly, the above disclosed subject matter is to be considered illustrative and not restrictive, and to the maximum extent allowed by law, it is intended by the appended claims to cover all such modifications and other embodiments which fall within the true scope of the present invention. The scope of the invention is to be determined by the broadest permissible interpretation of the following claims rather than the foregoing detailed description.

**Claims**

1. A modulo address generator (17), for allowing a contiguous set of memory locations within a memory bank (15) to be accessed as a circular buffer (19), the circular buffer (19) bounded by a starting address BEGIN and an end address END, the modulo address signal generator (17) comprising :

   a first logic circuit (9) for storing a previous address PTR(n-1) accessed within the circular buffer (19), a displacement DISP between PTR(n-1) and the next address PTR(n) to be accessed within the circular buffer (19), and for storing information which defines the boundaries of the circular buffer (19); wherein the first logic circuit (9) has a first register (10) for storing PTR(n);
   a sign unit (50), coupled to the first logic circuit (9), for determining the sign of DISP;
   a second logic circuit (8), coupled to the first logic circuit (9), for generating an absolute address DISP+PTR(n-1);
   a third logic circuit (7), coupled to the first and second logic circuits (9), (8) and to the sign unit (50), for generating a wrapped address, wherein the generation of the wrapped address involves adding the length of the circular buffer LENGTH to the absolute address when DISP is negative and involves subtracting LENGTH from the absolute address when DISP is positive; and

**characterised by** the starting address BEGIN and the end address END being arbitrary addresses within the memory bank (15) and a fourth logic circuit (6), coupled to the second and third logic circuits (8), (7), for determining which of the wrapped address and the absolute address is within the circular buffer register (19) and for loading the first register (10) with the address which is within the circular buffer (19), the determination involves comparing either one of the wrapped address and the absolute address to one of the circular buffer boundaries.

2. The modulo address generator (17) of claim 1 wherein if the determination involves the comparison of BEGIN to either one of the wrapped address and the absolute address then if DISP is positive, the wrapped address is compared to BEGIN, and if DISP is negative, the absolute address is compared to BEGIN; and

wherein if the determination involves the comparison of END to either one of the wrapped address and the absolute address then if DISP is negative, the wrapped address is compared to END, and if DISP is positive, the absolute address is compared to END.

3. The modulo address generator (17) of claim 2 wherein the first logic circuit (19) further comprising :

a second register for storing BEGIN (20);
a third register for storing LENGTH (30);
a fourth register for storing DISP (40);

wherein each register has an input and an output;
wherein the second logic circuit (8) has an adder (60), having two inputs and an output;
wherein the two inputs of the adder (60) are coupled to the outputs of the first and fourth registers (10), (40), accordingly;
wherein the third logic circuit (7) has an adder and a subtractor unit (70);
wherein the sign unit (50) has an output;
wherein the adder and subtractor unit (70) has two inputs, a control input and an output;
wherein the first input of the adder and subtractor unit (70) is coupled to the output of the adder (60), for receiving PTR(n-1)+DISP;
wherein the second input of the adder and subtractor unit (70) is coupled to the output of the third register (30), for receiving LENGTH;
wherein the control input of the adder and subtractor unit (70) is coupled to the output of the sign unit (150); and
wherein the signals provided to the control input of the adder and subtractor unit (70) determine when to add the LENGTH to PTR(n-1)+DISP and when to subtract LENGTH from PTR(n-1)+DISP.

4. The modulo address generator (17) of claim 3 wherein the fourth logic circuit (6) comprising:

a first multiplexer (90), having two inputs, a control input and an output, for selecting one of the absolute address and the wrapped address;
a comparator (100), having two inputs and an output, for comparing BEGIN to the address selected by the first multiplexer (90);
a second multiplexer (80), having two inputs, a control input and an output, for selecting one of the absolute address and the wrapped address and for sending the selected address to the first register (10);
a XOR logic gate (120), having two inputs and an output, for performing a XOR operation;

wherein the output of the adder (60) is coupled to the first input of the first and second multiplexers (80);
wherein the output of the adder and subtractor unit (70) is coupled to the second input of the first and second multiplexers (90), (80);
wherein the control input of the first multiplexer (90) and the first input of the XOR logic gate (120) are coupled to the sign unit (50);
wherein the output of the comparator (100) is coupled to the second input of the XOR logic gate (120);
wherein the control input of the second multiplexer (80) is coupled to the output of the XOR logic gate (120);
wherein the first input of the comparator (100) is coupled to the second register (20); and
wherein the second input of the comparator (100) is coupled to the output of the first multiplexer (90).

5. The modulo address generator (17) of claim 2 wherein the first logic circuit (9) further comprising :

a second register for storing END (20);

a third register for storing LENGTH (30);
a fourth register for storing DISP (40);

wherein each register has an input and an output;
wherein the second circuit (18) has an adder (60), having two inputs and an output;
wherein the two inputs of the adder (60) are coupled to the outputs of the first and fourth registers (101), (40), accordingly;
wherein the third logic circuit (7) has an adder and subtractor unit (70);
wherein the sign unit (50) has an output;
wherein the adder and subtractor unit (70) has two inputs, a control input and an output;
wherein the first input of the adder and subtractor unit (70) is coupled to the output of the first adder (60), for receiving PTR(n-1)+DISP;
wherein the second input of the adder and subtractor unit (70) is coupled to the output of the third register (30), for receiving LENGTH;
wherein the control input of the adder and subtractor unit (70) is coupled to the output of the sign unit (50); and
wherein the signals provided to the control input of the adder and subtractor unit (70) determine when to add the LENGTH to PTR(n-1)+DISP and when to subtract LENGTH from PTR(n-1)+DISP.

6. The modulo address generator (17) of claim 5 wherein the fourth logic circuit (6) comprising:

a first multiplexer (90), having two inputs, a control input and an output, for selecting one of the absolute address and the wrapped address;
a comparator (100), having two inputs and an output, for comparing END to the address selected by the first multiplexer (90);
a second multiplexer (80), having two inputs, a control input and an output, for selecting one of the absolute address and the wrapped address and for sending the selected address to the first register (10);
a XOR logic gate (120), having two inputs and an output, for performing a XOR operation;

wherein the output of the adder (160) is coupled to the second input of the first multiplexer and to the first input of the second multiplexer (80);
wherein the output of the adder and subtractor unit (70) is coupled to the first input of the first multiplexer (90) and to the second input of the second multiplexer (80);
wherein the control input of the first multiplexer (90) and the first input of the XOR logic gate (120) are coupled to the sign unit (50);
wherein the output of the comparator (100) is coupled to the second input of the XOR logic gate (120);
wherein the control input of the second multiplexer (80) is coupled to the output of the XOR logic gate (120);
wherein the first input of the comparator (100) is coupled to the second register (20); and
wherein the second input of the comparator (100) is coupled to the output of the first multiplexer (90).

7. A method for implementing modulo addressing, by producing a target address within a circular buffer, the method comprising the following steps of :

determining the location of the circular buffer(19), and receiving the one of the boundaries of the circular buffer (19), the length LENGTH of the circular buffer (19), and an initial target address PTR(0) within the circular buffer (19);
receiving a displacement DISP, between a previous target address PTR(n-1) within a circular buffer (19) and the current target address PTR(n) within the circular buffer (19), n being a positive integer;
determining whether DISP is positive or negative and producing accordingly sign signal;
producing an absolute address by adding DISP to PTR(n-1);
producing a wrapped address, according to the sign signal, whereas the wrapped address equals DISP+PTR(n-1)-LENGTH if the sign signal indicates that DISP is positive, the wrapped address equals DISP+PTR(n-1)+LENGTH if the sign signal indicates that DISP is negative;
**characterised by** the starting address BEGIN and the end address END being arbitrary addresses within the memory bank (15) and **characterised by** the steps of:
determining which of the absolute address and the wrapped address is within the circular buffer (19); wherein the determination involves the comparison of one of the wrapped address and the absolute address to one of the circular buffer boundaries;
giving the current target address PTR(n) the value of the address, out of the wrapped address and the absolute address which is within the boundaries of the circular buffer; and

jumping to the step of receiving a displacement DISP when a new displacement is received.

**8.** The method of claim 7 wherein if DISP is positive, the wrapped address is compared to BEGIN, and if DISP is negative, the absolute address is compared to BEGIN.

**Patentansprüche**

**1.** Moduloadressgenerator (17) zum Gestatten, dass auf einen zusammenhängenden Satz von Speicherpositionen innerhalb einer Speicherbank (15) als Ringpuffer (19) zugegriffen wird, wobei der Ringpuffer (19) von einer Anfangsadresse BEGIN und einer Endadresse END begrenzt ist,

wobei der Moduloadresssignalgenerator (17) umfasst:

eine erste Logikschaltung (9) zum Speichern einer vorherigen Adresse PTR(n-1), auf die in dem Ringpuffer (19) zugegriffen wurde, eines Versatzes DISP zwischen PTR(n-1) und der nächsten Adresse PTR(n), auf die in dem Ringpuffer (19) zugegriffen werden soll, und zum Speichern von Information, die die Grenzen des Ringpuffers (19) definiert; wobei die erste Logikschaltung (9) ein erstes Register (10) zum Speichern von PTR(n) aufweist;

eine Vorzeicheneinheit (50), die mit der ersten Logikschaltung (9) gekoppelt ist, zum Bestimmen des Vorzeichens von DISP;

eine zweite Logikschaltung (8), die mit der ersten Logikschaltung (9) gekoppelt ist, zum Erzeugen einer absoluten Adresse DISP+PTR(n-1);

eine dritte Logikschaltung (7), die mit der ersten und zweiten Logikschaltung (9), (8) und der Vorzeicheneinheit (50) gekoppelt ist, zum Erzeugen einer umgelaufenen Adresse, wobei die Erzeugung der umgelaufenen Adresse ein Addieren der Länge des Ringpuffers LENGTH zu der absoluten Adresse einbezieht, wenn DISP negativ ist, und ein Subtrahieren von LENGTH von der absoluten Adresse einbezieht, wenn DISP positiv ist; und

**dadurch gekennzeichnet, dass** die Anfangsadresse BEGIN und die Endadresse END willkürliche Adressen innerhalb der Speicherbank (15) sind sowie durch eine vierte Logikschaltung (6) die mit der zweiten und dritten Logikschaltung (8), (7) gekoppelt ist, zum Bestimmen, welche der umgelaufenen Adresse und der absoluten Adresse innerhalb des Ringpufferregisters (19) liegt, und zum Laden des ersten Registers (10) mit derjenigen Adresse, die innerhalb des Ringpuffers liegt (19), wobei die Bestimmung ein Vergleichen einer der umgelaufenen Adresse und der absoluten Adresse mit einer der Ringpuffergrenzen einbezieht.

**2.** Moduloadressgenerator (17) nach Anspruch 1, wobei, falls die Bestimmung den Vergleich von BEGIN mit einer der umgelaufenen Adresse und der absoluten Adresse einbezieht, die umgelaufene Adresse mit BEGIN verglichen wird, falls DISP positiv ist, und die absolute Adresse mit BEGIN verglichen wird, falls DISP negativ ist;

und wobei, falls die Bestimmung den Vergleich von END mit einer der umgelaufenen Adresse und der absoluten Adresse einbezieht, die umgelaufene Adresse mit END verglichen wird, falls DISP negativ ist, und die absolute Adresse mit END verglichen wird, falls DISP positiv ist.

**3.** Moduloadressgenerator (17) von Anspruch 2, wobei die erste Logikschaltung (19) weiter umfasst:

ein zweites Register zum Speichern von BEGIN (20);
ein drittes Register zum Speichern von LENGTH (30);
ein viertes Register zum Speichern von DISP (40);

wobei jedes Register einen Eingang und einen Ausgang aufweist;
wobei die zweite Logikschaltung (8) einen Addierer (60) mit zwei Eingängen und einem Ausgang aufweist;
wobei die zwei Eingänge des Addierers (60) entsprechend mit den Ausgängen des ersten und vierten Registers (10), (40) gekoppelt sind;
wobei die dritte Logikschaltung (7) einen Addierer und eine Subtrahierereinheit (70) aufweist;
wobei die Vorzeicheneinheit (50) einen Ausgang aufweist;
wobei die Addierer- und Subtraktionseinheit (70) zwei Eingänge, einen Steuereingang und einen Ausgang aufweist;
wobei der erste Eingang der Addierer- und Subtraktionseinheit (70) mit dem Ausgang des Addierers (60) gekoppelt ist, um PTR(n-1)+DISP zu empfangen;

wobei der zweite Eingang der Addierer- und Subtraktionseinheit (70) mit dem Ausgang des dritten Registers (30) gekoppelt ist, um LENGTH zu empfangen;

wobei der Steuereingang der Addierer- und Subtraktionseinheit (70) mit dem Ausgang der Vorzeicheneinheit (150) gekoppelt ist; und

wobei die an den Steuereingang der Addierer- und Subtraktionseinheit (70) gelieferten Signale bestimmen, wann LENGTH zu PTR(n-1)+DISP hinzu zu addieren ist und wann LENGTH von PTR(n-1)+DISP zu subtrahieren ist.

4. Moduloadressgenerator (17) von Anspruch 3, wobei die vierte Logikschaltung (6) umfasst:

einen ersten Multiplexer (90) mit zwei Eingängen, einem Steuereingang und einem Ausgang zum Auswählen einer der absoluten Adresse und der umgelaufenen Adresse;

einen Komparator (100) mit zwei Eingängen und einem Ausgang zum Vergleichen von BEGIN mit der von dem ersten Multiplexer (90) ausgewählten Adresse;

einen zweiten Multiplexer (80) mit zwei Eingängen, einem Steuereingang und einem Ausgang zum Auswählen einer der absoluten Adresse und der umgelaufenen Adresse sowie zum Senden der ausgewählten Adresse an das erste Register (10);

ein XOR-Logikgatter (120) mit zwei Eingängen und einem Ausgang zum Durchführen einer XOR-Operation;

wobei der Ausgang des Addierers (60) mit dem ersten Eingang des ersten und zweiten Multiplexers (80) gekoppelt ist;

wobei der Ausgang der Addierer- und Subtraktionseinheit (70) mit den zweiten Eingängen des ersten und zweiten Multiplexers (90), (80) gekoppelt ist;

wobei der Steuereingang des ersten Multiplexers (90) und der erste Eingang des XOR-Logikgatters (120) mit der Vorzeicheneinheit (50) gekoppelt sind;

wobei der Ausgang des Komparators (100) mit dem zweiten Eingang des XOR-Logikgatters (120) gekoppelt ist;

wobei der Steuereingang des zweiten Multiplexers (80) mit dem Ausgang des XOR-Logikgatters (120) gekoppelt ist;

wobei der erste Eingang des Komparators (100) mit dem zweiten Register (20) gekoppelt ist; und

wobei der zweite Eingang des Komparators (100) mit dem Ausgang des ersten Multiplexers (90) gekoppelt ist.

5. Moduloadressgenerator (17) von Anspruch 2, wobei die erste Logikschaltung (9) weiter umfasst:

ein zweites Register zum Speichern END (20)

ein drittes Register zum Speichern von LENGTH (30);

ein viertes Register zum Speichern von DISP (40);

wobei jedes Register einen Eingang und einen Ausgang aufweist;

wobei die zweite Logikschaltung (18) einen Addierer (60) mit zwei Eingängen und einem Ausgang aufweist;

wobei die zwei Eingänge des Addierers (60) entsprechend mit den Ausgängen des ersten und vierten Registers (101), (40) gekoppelt sind;

wobei die dritte Logikschaltung (7) eine Addierer- und Subtraktionseinheit (70) aufweist;

wobei die Vorzeicheneinheit (50) einen Ausgang aufweist;

wobei die Addierer- und Subtraktionseinheit (70) zwei Eingänge, einen Steuereingang und einen Ausgang aufweist;

wobei der erste Eingang der Addierer- und Subtraktionseinheit (70) mit dem Ausgang des ersten Addierers (60) gekoppelt ist, um PTR(n-1)+DISP zu empfangen;

wobei der zweite Eingang der Addierer- und Subtraktionseinheit (70) mit dem Ausgang des dritten Registers (30) gekoppelt ist, um LENGTH zu empfangen;

wobei der Steuereingang der Addierer- und Subtraktionseinheit (70) mit dem Ausgang der Vorzeicheneinheit (50) gekoppelt ist; und

wobei die an den Steuereingang der Addierer- und Subtraktionseinheit (70) gelieferten Signale bestimmen, wann LENGTH zu PTR(n-1)+DISP hinzu zu addieren ist und wann LENGTH von PTR(n-1)+DISP zu subtrahieren ist.

**6.** Moduloadressgenerator (17) nach Anspruch 5, wobei die vierte Logikschaltung (6) umfasst:

einen ersten Multiplexer (90) mit zwei Eingängen, einem Steuereingang und einem Ausgang zum Auswählen einer der absoluten Adresse und der umgelaufenen Adresse;
einen Komparator (100) mit zwei Eingängen und einem Ausgang zum Vergleichen von END mit der von dem ersten Multiplexer (90) ausgewählten Adresse;
einen zweiten Multiplexer (80) mit zwei Eingängen, einem Steuereingang und einem Ausgang zum Auswählen einer der absoluten Adresse und der umgelaufenen Adresse und zum Senden der ausgewählten Adresse an das erste Register (10);
ein XOR-Logikgatter (120) mit zwei Eingängen und einem Ausgang zum Durchführen einer XOR-Operation;

wobei der Ausgang des Addierers (160) mit dem zweiten Eingang des ersten Multiplexers und dem ersten Eingang des zweiten Multiplexers (80) verbunden ist;
wobei der Ausgang der Addierer- und Subtraktionseinheit (70) mit dem ersten Eingang des ersten Multiplexers (90) und dem zweiten Eingang des zweiten Multiplexers (80) gekoppelt ist,
wobei der Steuereingang des ersten Multiplexers (90) und der erste Eingang des XOR-Logikgatters (120) mit der Vorzeicheneinheit (50) gekoppelt sind;
wobei der Ausgang des Komparators (100) mit dem zweiten Eingang des XOR-Logikgatters (120) gekoppelt ist;
wobei der Steuereingang des zweiten Multiplexers (80) mit dem Ausgang des XOR-Logikgatters (120) gekoppelt ist;
wobei der erste Eingang des Komparators (100) mit dem zweiten Register (20) gekoppelt ist; und
wobei der zweite Eingang des Komparators (100) mit dem Ausgang des ersten Multiplexers (90) gekoppelt ist.

**7.** Verfahren zum Implementieren einer Moduloadressierung durch Erzeugen einer Zieladresse innerhalb eines Ringpuffers, wobei das Verfahren die folgenden Schritte umfasst:

Bestimmen der Position des Ringpuffers (19) und Empfangen einer der Grenzen des Ringpuffers (19), der Länge LENGTH des Ringpuffers (19) und einer anfänglichen Zieladresse PTR(0) innerhalb des Ringpuffers (19);
Empfangen eines Versatzes DISP zwischen einer vorherigen Zieladresse PTR(n-1) innerhalb des Ringpuffers (19) sowie der aktuellen Zieladresse PTR(n) innerhalb des Ringpuffers (19), wobei n eine positive ganze Zahl ist;
Bestimmen, ob DISP positiv oder negativ ist, und Erzeugen eines entsprechenden Vorzeichensignals;
Erzeugen einer absoluten Adresse durch Addieren von DISP zu PTR(n-1);
Erzeugen einer umgelaufenen Adresse gemäß dem Vorzeichensignal, wobei die umgelaufene Adresse gleich DISP+PTR(n-1)-LENGTH ist, falls das Vorzeichensignal anzeigt, dass DISP positiv ist, und wobei die umgelaufene Adresse DISP+PTR(n-1)+LENGTH ist, falls das Vorzeichensignal anzeigt, dass DISP negativ ist;

**dadurch gekennzeichnet, dass** die Anfangsadresse BEGIN und die Endadresse END willkürliche Adressen innerhalb der Speicherbank (15) sind und **gekennzeichnet durch** die Schritte:

Bestimmen, welche der absoluten Adresse und der umgelaufenen Adresse innerhalb des Ringpuffers(19) liegt, wobei die Bestimmung den Vergleich einer der umgelaufenen Adresse und der absoluten Adresse mit einer der Ringpuffergrenzen einbezieht;
Vergeben, an eine aktuelle Zieladresse PTR(n), des Wertes derjenigen Adresse, aus der umgelaufenen Adresse und der absoluten Adresse, der innerhalb der Grenzen des Ringpuffers liegt;
Springen zu dem Schritt des Empfangens eines Versatzes DISP, wenn ein neuer Versatz empfangen wird.

**8.** Verfahren nach Anspruch 7, wobei, falls DISP positiv ist, die umgelaufene Adresse mit BEGIN verglichen wird, und, falls DISP negativ ist, die absolute Adresse mit BEGIN verglichen wird.

**Revendications**

**1.** Générateur d'adresse de modulo (17), pour permettre l'accès à un ensemble contigu de positions de mémoire à l'intérieur d'un bloc de mémoire (15) sous la forme d'un tampon circulaire (19), le tampon circulaire (19) étant délimité par une adresse de début BEGIN et une adresse de fin END, le générateur de signal d'adresse de modulo (17) comprenant :

un premier circuit logique (9) pour stocker une adresse précédente PTR(n-1) à laquelle on a accédé à l'intérieur du tampon circulaire (19), un déplacement DISP entre PTR(n-1) et l'adresse suivante PTR(n) à laquelle accéder à l'intérieur du tampon circulaire (19), et pour stocker des informations définissant les limites du tampon circulaire (19) ; dans lequel le premier circuit logique (9) comprend un premier registre (10) pour stocker PTR (n) ;

une unité de signe (50), couplée au premier circuit logique (9), pour déterminer le signe de DISP ;

un deuxième circuit logique (8), couplé au premier circuit logique (9), pour générer une adresse absolue DISP+PTR(n-1) ;

un troisième circuit logique (7), couplé aux premier et deuxième circuits logiques (9), (8) et à l'unité de signe (50), pour générer une adresse enroulée, dans lequel la génération de l'adresse enroulée implique l'addition de la longueur du tampon circulaire LENGTH et de l'adresse absolue lorsque DISP est négatif, et implique la soustraction de LENGTH de l'adresse absolue lorsque DISP est positif ; et

**caractérisé en ce que** l'adresse de début BEGIN et l'adresse de fin END sont des adresses arbitraires à l'intérieur du bloc de mémoire (15), et **en ce qu'**un quatrième circuit logique (6), couplé aux deuxième et troisième circuits logiques (8), (7), pour déterminer laquelle parmi l'adresse enroulée et l'adresse absolue se trouve à l'intérieur du registre tampon circulaire (19) et pour charger le premier registre (10) avec l'adresse qui se trouve à l'intérieur du tampon circulaire (19), la détermination impliquant la comparaison de l'une ou l'autre parmi l'adresse enroulée et l'adresse absolue avec une des limites du tampon circulaire.

2. Générateur d'adresse de modulo (17) selon la revendication 1, dans lequel, si la détermination implique la comparaison de BEGIN avec l'une ou l'autre parmi l'adresse enroulée et l'adresse absolue, alors, si DISP est positif, l'adresse enroulée est comparée avec BEGIN, et si DISP est négatif, l'adresse absolue est comparée avec BEGIN ; et

dans lequel si la détermination implique la comparaison de END avec l'une ou l'autre parmi l'adresse enroulée et l'adresse absolue, alors, si DISP est négatif, l'adresse enroulée est comparée avec END, et si DISP est positif, l'adresse absolue est comparée avec END.

3. Générateur d'adresse de modulo (17) selon la revendication 2, dans lequel le premier circuit logique (19) comprend en outre :

un deuxième registre pour stocker BEGIN (20) ;
un troisième registre pour stocker LENGTH (30) ;
un quatrième registre pour stocker DISP (40) ;

dans lequel chaque registre comprend une entrée et une sortie ;
dans lequel le deuxième circuit logique (8) comprend un additionneur (60), comprenant deux entrées et une sortie ;
dans lequel les deux entrées de l'additionneur (60) sont couplées aux sorties des premier et quatrième registres (10), (40), respectivement ;
dans lequel le troisième circuit logique (7) comprend une unité d'additionneur et de soustracteur (70) ;
dans lequel l'unité de signe (50) comprend une sortie ;
dans lequel l'unité d'additionneur et de soustracteur (70) comprend deux entrées, une entrée de commande et une sortie ;
dans lequel la première entrée de l'unité d'additionneur et de soustracteur (70) est couplée à la sortie de l'additionneur (60), pour recevoir PTR(n-1)+DISP ;
dans lequel la deuxième entrée de l'unité d'additionneur et de soustracteur (70) est couplée à la sortie du troisième registre (30), pour recevoir LENGTH ;
dans lequel l'entrée de commande de l'unité d'additionneur et de soustracteur (70) est couplée à la sortie de l'unité de signe (150) ; et
dans lequel les signaux envoyés à l'entrée de commande de l'unité d'additionneur et de soustracteur (70) déterminent le moment de l'addition de LENGTH et de PTR(n-1)+DISP, et le moment de la soustraction de LENGTH de PTR(n-1)+DISP.

4. Générateur d'adresse de modulo (17) selon la revendication 3, dans lequel le quatrième circuit logique (6) comprend :

un premier multiplexeur (90), comprenant deux entrées, une entrée de commande et une sortie, pour sélectionner une adresse parmi l'adresse absolue et l'adresse enroulée ;

un comparateur (100), comprenant deux entrées et une sortie, pour comparer BEGIN avec l'adresse sélectionnée par le premier multiplexeur (90) ;

un deuxième multiplexeur (80), comprenant deux entrées, une entrée de commande et une sortie, pour sélectionner une adresse parmi l'adresse absolue et l'adresse enroulée et pour envoyer l'adresse sélectionnée au premier registre (10) ;

une porte logique XOR (120), comprenant deux entrées et une sortie, pour exécuter une opération XOR ;

dans lequel la sortie de l'additionneur (60) est couplée à la première entrée des premier et deuxième multiplexeurs (80) ;

dans lequel la sortie de l'unité d'additionneur et de soustracteur (70) est couplée à la deuxième entrée des premier et deuxième multiplexeurs (90), (80) ;

dans lequel l'entrée de commande du premier multiplexeur (90) et la première entrée de la porte logique XOR (120) sont couplées à l'unité de signe (50) ;

dans lequel la sortie du comparateur (100) est couplée à la deuxième entrée de la porte logique XOR (120) ;

dans lequel l'entrée de commande du deuxième multiplexeur (80) est couplée à la sortie de la porte logique XOR (120) ;

dans lequel la première entrée du comparateur (100) est couplée au deuxième registre (20) ; et

dans lequel la deuxième entrée du comparateur (100) est couplée à la sortie du premier multiplexeur (90).

5. Générateur d'adresse de modulo (17) selon la revendication 2,
   dans lequel le premier circuit logique (9) comprend en outre :

   un deuxième registre pour stocker END (20) ;
   un troisième registre pour stocker LENGTH (30) ;
   un quatrième registre pour stocker DISP (40) ;

   dans lequel chaque registre comprend une entrée et une sortie ;
   dans lequel le deuxième circuit (18) comprend un additionneur (60), comprenant deux entrées et une sortie ;
   dans lequel les deux entrées de l'additionneur (60) sont couplées aux sorties des premier et quatrième registres (101), (40), respectivement ;
   dans lequel le troisième circuit logique (7) comprend une unité d'additionneur et de soustracteur (70) ;
   dans lequel l'unité de signe (50) comprend une sortie ;
   dans lequel l'unité d'additionneur et de soustracteur (70) comprend deux entrées, une entrée de commande et une sortie ;
   dans lequel la première entrée de l'unité d'additionneur et de soustracteur (70) est couplée à la sortie du premier additionneur (60), pour recevoir PTR(n-1)+DISP ;
   dans lequel la deuxième entrée de l'unité d'additionneur et de soustracteur (70) est couplée à la sortie du troisième registre (30), pour recevoir LENGTH ;
   dans lequel l'entrée de commande de l'unité d'additionneur et de soustracteur (70) est couplée à la sortie de l'unité de signe (50) ; et
   dans lequel les signaux envoyés à l'entrée de commande de l'unité d'additionneur et de soustracteur (70) déterminent le moment de l'addition de LENGTH et de PTR(n-1)+DISP, et le moment de la soustraction de LENGTH de PTR(n-1)+DISP.

6. Générateur d'adresse de modulo (17) selon la revendication 5, dans lequel le quatrième circuit logique (6) comprend :

   un premier multiplexeur (90), comprenant deux entrées, une entrée de commande et une sortie, pour sélectionner une adresse parmi l'adresse absolue et l'adresse enroulée ;
   un comparateur (100), comprenant deux entrées et une sortie, pour comparer END avec l'adresse sélectionnée par le premier multiplexeur (90) ;
   un deuxième multiplexeur (80), comprenant deux entrées, une entrée de commande et une sortie, pour sélectionner une adresse parmi l'adresse absolue et l'adresse enroulée et pour envoyer l'adresse sélectionnée au premier registre (10) ;
   une porte logique XOR (120), comprenant deux entrées et une sortie, pour exécuter une opération XOR ;

dans lequel la sortie de l'additionneur (160) est couplée à la deuxième entrée du premier multiplexeur et à la première entrée du deuxième multiplexeur (80) ;

dans lequel la sortie de l'unité d'additionneur et de soustracteur (70) est couplée à la première entrée du premier multiplexeur (90) et à la deuxième entrée du deuxième multiplexeur (80) ;

dans lequel l'entrée de commande du premier multiplexeur (90) et la première entrée de la porte logique XOR (120) sont couplées à l'unité de signe (50) ;

dans lequel la sortie du comparateur (100) est couplée à la deuxième entrée de la porte logique XOR (120) ;

dans lequel l'entrée de commande du deuxième multiplexeur (80) est couplée à la sortie de la porte logique XOR (120) ;

dans lequel la première entrée du comparateur (100) est couplée au deuxième registre (20) ; et

dans lequel la deuxième entrée du comparateur (100) est couplée à la sortie du premier multiplexeur (90).

7. Procédé pour mettre en application l'adressage de modulo, en produisant une adresse cible à l'intérieur d'un tampon circulaire, le procédé comprenant les étapes suivantes consistant à :

déterminer la position du tampon circulaire (19), et recevoir une première des limites du tampon circulaire (19), la longueur LENGTH du tampon circulaire (19) et une adresse cible initiale PTR(0) à l'intérieur du tampon circulaire (19) ;

recevoir un déplacement DISP entre une adresse cible précédente PTR(n-1) à l'intérieur d'un tampon circulaire (19) et l'adresse cible en cours PTR(n) à l'intérieur du tampon circulaire (19), n étant un entier positif ;

déterminer si DISP est positif ou négatif et produire un signal de signe correspondant ;

produire une adresse absolue en additionnant DISP et PTR(n-1) ;

produire une adresse enroulée, selon le signal de signe, l'adresse enroulée étant égale à DISP+PTR(n-1)-LENGTH si le signal de signe indique que DISP est positif, et l'adresse enroulée étant égale à DISP+PTR(n-1)+LENGTH si le signal de signe indique que DISP est négatif ;

**caractérisé en ce que** l'adresse de début BEGIN et l'adresse de fin END sont des adresses arbitraires à l'intérieur du bloc de mémoire (15), et **caractérisé par** les étapes consistant à :

déterminer laquelle parmi l'adresse absolue et l'adresse enroulée se trouve à l'intérieur du tampon circulaire (19) ; dans lequel la détermination implique la comparaison de l'une ou l'autre parmi l'adresse enroulée et l'adresse absolue avec une des limites du tampon circulaire ;

donner à l'adresse cible en cours PTR(n) la valeur de l'adresse, à partir de l'adresse enroulée et de l'adresse absolue qui se trouve à l'intérieur des limites du tampon circulaire ; et

revenir à l'étape de réception d'un déplacement DISP lorsqu'un nouveau déplacement est reçu.

8. Procédé selon la revendication 7, dans lequel si DISP est positif, l'adresse enroulée est comparée avec BEGIN, et si DISP est négatif, l'adresse absolue est comparée avec BEGIN.

**FIG. 1**

DATA BUS — 110

17

50 SIGN UNIT

8 SECOND LOGIC CIRCUIT

9 FIRST LOGIC CIRCUIT

112

ADDRESS BUS

BEGIN

END

15

19

7 THIRD LOGIC CIRCUIT

6 FOURTH LOGIC CIRCUIT

MODULO ADDRESS GENERATOR

EP 1 039 370 B1

14

FIG. 2

FIG. 3

EP 1 039 370 B1

16

DETERMINING THE LOCATION OF THE CIRCULAR BUFFER, RECEIVING A BOUNDARY, LENGTH, PTR(0) — *210*

*215*

RECEIVE DISP — *220*

*265*

*225*

DETERMINING THE SIGN OF DISP PRODUCING ABSOLUTE ADDRESS DISP +PTR(n−1) — *230*

*235*

PRODUCING WRAPPED ADDRESS DISP+PTR(n−1)±length — *240*

*245*

DETERMINING WHICH OF THE WRAPPED ADDRESS AND THE ABSOLUTE ADDRESS IS WITHIN THE BOUNDARIES OF THE CIRCULAR BUFFER, BY COMPARING EITHER ONE OF THE WRAPPED ADDRESSES AND THE ABSOLUTE ADDRESS TO ONE OF THE CIRCULAR BUFFER BOUNDARIES — *250*

*255*

PTR(n)=THE ADDRESS WHICH IS WITHIN THE BOUNDARIES OF THE CIRCULAR BUFFER OUT OF THE WRAPPED ADDRESS AND THE ABSOLUTE ADDRESS — *260*

# FIG. 4